# EUROPÄISCHE PATENTSCHRIFT

(11) **EP 1 753 647 B1**
(45) Veröffentlichungstag und Bekanntmachung des Hinweises auf die Patenterteilung: **08.10.2008**
(21) Anmeldenummer: 05743090.2
(22) Anmeldetag: 15.04.2005
(51) Int. Cl.: B60S 1/38

(54) **WISCHBLATT**
WIPER BLADE
BALAI D'ESSUIE-GLACE

(30) Priorität: 28.05.2004 DE 102004026686; 22.10.2004 DE 102004051466
(43) Veröffentlichungstag der Anmeldung: 21.02.2007
(73) Patentinhaber: ROBERT BOSCH GMBH, 70442 Stuttgart (DE)
(72) Erfinder: WILMS, Christian, B-3582 Koersel-Beringen (BE); VERELST, Hubert, B-3300 Tienen (BE); BEELEN, Hans, B-3540 Herk de Stad (BE)
(86) Internationale Anmeldenummer: PCT/EP2005/051665
(87) Internationale Veröffentlichungsnummer: WO 2005/115814

(56) Entgegenhaltungen:
- WO-A-20/05092680
- DE-A1- 10 025 710
- DE-A1- 10 245 693

## Beschreibung

### Stand der Technik

Die Erfindung geht von einem Wischblatt nach dem Oberbegriff des Anspruchs 1 aus.

Aus der DE 101 13 680 A1 ist ein gelenkfreies Wischblatt bekannt, dessen Wischleiste aus einem elastomeren Werkstoff besteht und an ihrer Oberseite einen Spoiler besitzt. Dieser kann unmittelbar angeformt und aus dem gleichen Werkstoff bestehen wie die Wischleiste oder ein separates Bauteil aus einem geeigneten anderen Kunststoff sein. Der Spoiler kann allein oder zusammen mit Federschienen, die in seitliche Längsnuten des Profils der Wischleiste eingelegt sind, als Tragelement des Wischblatts dienen. An den Enden des Wischblatts sind Kappen aufgesetzt, deren Leitflächen in Längsrichtung des Wischblatts verlaufen und sich mit einem geringen Absatz an die Leitfläche des Spoilers anschließen. Sie halten die Wischleiste und die Federschienen an den Enden zusammen. Im mittleren Bereich des Wischblatts ist in einem Ausschnitt des Spoilers eine Anschlussvorrichtung nach dem so genannten "Sidelock-System" am Tragelement befestigt, bei dem der Wischarm im Bereich der Anschlussvorrichtung seitlich parallel zum Wischblatt verläuft. Es ist auch ein so genanntes "Overlock-System" bekannt, bei dem der Wischarm im Bereich der Anschlussvorrichtung oberhalb des Wischblatts verläuft. Die Anschlussvorrichtung besitzt an ihren Seitenteilen jeweils zwei Krallen, die die Federschienen des Tragelements seitlich umfassen und halten.

Aus der DE 100 25 710 A1 ist ein so genanntes gelenkfreies Wischblatt bekannt, das eine gummielastische Wischleiste mit einer Wischlippe besitzt. Zwischen der Wischlippe und einer Kopfleiste sind seitliche Längsnuten vorgesehen, in die als Tragelement Federschienen eingesetzt sind. Diese werden durch Brückenelemente an ihren Enden und ein mittleres Anschlusselement zusammengehalten. Die Brückenelemente besitzen als Fixiermittel einen sich in Längsrichtung der Wischleiste erstreckenden Fortsatz mit einem zur Kopfleiste gerichteten Vorsprung. Bei der Montage wird der Fortsatz in Richtung Kopfleiste gebogen, sodass der Vorsprung in die Kopfleiste eingreift und die Federschienen in Längsrichtung relativ zur Wischleiste fixiert. Die Brückenelemente werden schließlich mit Endkappen abgedeckt.

Aus der DE-A-102 45 693 ist ein Wischblatt mit den Merkmalen des Oberbegriffs des Anspruchs 1 bekannt. Weiterhin ist aus der nicht vorveröffentlichten WO-A-2005/09 26 80 ein Wischblatt bekannt, bei dem eine Endkappe mit einer Federzunge vorgesehen ist, die in die Kopfleiste der Wischleiste eingedrückt ist.

### Vorteile der Erfindung

Nach der Erfindung weisen die Endkappen des Wischblatts lösbare Fixiermittel auf, die in eine Kopfleiste der Wischleiste eingreifen, wobei die axiale Verschiebbarkeit der Federschienen relativ zur Wischleiste durch die Endkappen begrenzt ist. Die Endkappen, die vorzugsweise Spritzgussteile aus Kunststoff sind, werden vom Ende her auf die Wischleiste und die Federschienen aufgeschoben, wobei die Federschienen in inneren Führungsprofilen der Endkappen geführt sind. Die Führungsprofile sind an der endseitigen Stirnseite geschlossen, sodass die Federschienen durch die geschlossenen Stirnflächen in Längsrichtung relativ zu den Endkappen fixiert sind. Da die Endkappen ihrerseits in Längsrichtung durch die lösbaren Fixiermittel relativ zur Kopfleiste der Wischleiste fixiert sind, sind auch die Federschienen über die Endkappe relativ zur Wischleiste fixiert. Weitere Bauelemente sind nicht erforderlich. Dadurch wird neben der Verringerung der Teilevielfalt auch der Arbeitsgang zum Verbinden dieser Bauteile eingespart.

In der Erfindung besitzen die Endkappen als Fixiermittel jeweils eine im Wesentlichen parallel zur oberen Seite der Kopfleiste verlaufende Federzunge, die an ihrer Unterseite eine im montierten Zustand in die Kopfleiste eingreifende Sperrnase aufweist. Bei der Demontage der Endkappe wird die Federzunge angehoben, sodass die Sperrnase außer Eingriff gelangt und die Endkappe von der Wischleiste abgezogen werden kann. Damit sich die Sperrnase in montierter Position nicht selbstständig löst, wird die Federzunge mit einem Riegel blockiert, der in einer zur äußeren Stirnseite weisenden Aussparung der Endkappe geführt ist und die Federzunge mit der Sperrnase in einer Verriegelungsposition gegen die Kopfleiste drückt. Bei der Demontage werden zunächst die Riegel gelöst, bevor die Federzunge angehoben wird.

Um die Serienmontage zu erleichtern, ist der Riegel in entriegelter Position über mindestens eine Sollbruchstelle mit der Endkappe verbunden, sodass Endkappe und Riegel zweckmäßigerweise als ein Bauteil zur Erstmontage angeliefert werden, wodurch die Teilevielfalt des Wischblatts verringert ist. Zudem ist eine falsche Montage des Riegels ausgeschlossen, da dieser sich in einer vormontierten Stellung befindet. Bei der Montage wie die Verbindung an der Sollbruchstelle gelöst und der Riegel in die Verriegelungsposition geschoben. Auch bezüglich der Wischleiste ist eine Fehlmontage der Endkappen ausgeschlossen, da die äußere Form und das innere Führungsprofil der Endkappe der Kontur der Wischleiste und/oder eines Spoilers entsprechen.

Zur zusätzlichen Arretierung der Federschienen können diese im Bereich der Endkappen Rastlöcher aufweisen, in denen an der Unterseite der Federzungen angeordnete Rastzapfen eingreifen. Der Sperrnase und den Rastzapfen können voneinander getrennte Federzungen zugeordnet sein, die bezüglich ihrer Federeigenschaften den unterschiedlichen Aufgaben besser angepasst werden können.

Die erfindungsgemäßen Endkappen sind sehr einfach zu demontieren. Dazu wird lediglich der Riegel aus der Aussparung gezogen und zwar so weit, dass die Federzunge abhebt und die Sperrnase außer Eingriff kommt. In diesem Zustand kann beispielsweise eine verschlissene Wischleiste ausgetauscht werden. Um den Riegel zur Demontage bzw. Montage besser fassen zu können, besonders wenn dieser beispielsweise durch abgelagerten Schmutz oder andere Umwelteinflüsse schwer verschiebbar ist, weist er gemäß seiner Ausgestaltung der Erfindung vorteilhafterweise mehrere seitliche Griffmulden auf.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

Fig. 1 eine perspektivische Teilansicht eines Wischblattendes mit einer Endkappe in einer Explosionsdarstellung,
Fig. 2 eine Ansicht eines Wischblattendes nach Fig. 1 von unten,
Fig. 3 eine perspektivische Teilansicht einer montierten Endkappe,
Fig. 4 eine Funktionsskizze eines Wischblatts mit Verriegelungselementen der Endkappe,
Fig. 5 eine Skizze einer Endkappe als Seitenansicht und
Fig. 6 eine Variante einer Endkappe nach Fig. 1.

### Beschreibung der Ausführungsbeispiele

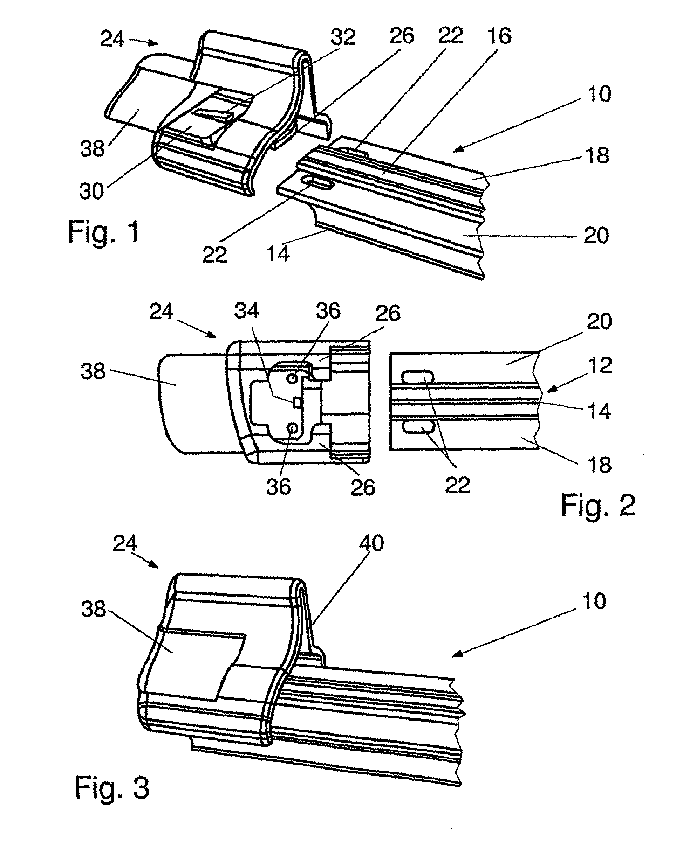

Von einem Scheibenwischer sind nur die Teile eines gelenkfreien Wischblatts 10 dargestellt, soweit sie für das Verständnis der Erfindung notwendig sind (Fig. 1). Das Wischblatt 10 weist eine Wischleiste 12 aus einem elastomeren Werkstoff auf, deren untere, einer nicht dargestellten Fahrzeugscheibe zugewandte Seite als Wischlippe 14 ausgebildet ist, während die obere Seite eine Kopfleiste 16 bildet. Überdies besitzt das Wischblatt 10 oberhalb der Kopfleiste 16 einen nicht dargestellten Spoiler. Um die Federeigenschaft des Wischblatts 10 zu verbessern, weist es zwei Federschienen 18 und 20 aus Federstahl auf, die in seitliche Längsnuten zwischen der Wischlippe 14 und der Kopfleiste 16 eingelegt sind und als Tragelement dienen. Die Federschienen 18 und 20 besitzen im unbelasteten Zustand eine stärkere Krümmung als die Fahrzeugscheibe und bewirken, dass das Wischblatt 10 unter einer definierten Anpresskraft und mit einer geeigneten Druckverteilung über die gesamte Länge an der Fahrzeugscheibe anliegt. Um eine Relativbewegung zwischen der Wischleiste 12 und den Federschienen 18 und 20 in Längsrichtung zu begrenzen, werden die Federschienen 18 und 20 an ihren Enden zusammengehalten.

An den Enden der Wischleiste 12 ist jeweils eine Endkappe 24 vorgesehen. Die Endkappe 24 weist ein inneres Führungsprofil 26 auf, das von jeweils zwei parallel zur Längsrichtung der Wischleiste 12 verlaufenden Führungsflächen und Stegen gebildet wird. Während die Führungsflächen die Endkappe 24 an den die Längsnuten überragenden Längsseiten der Federschienen 18 und 20 führen, stützen sich die Stege an den Seitenflächen der Wischleiste 12 unterhalb der Federschienen 18 und 20 ab (Fig. 2). Die Endkappe 24 ist zweckmäßigerweise ein Spritzgussteil aus Kunststoff und weist eine angeformte und im Wesentlichen parallel zur oberen Seite der Kopfleiste 16 verlaufende Federzunge 30 auf. An ihrer zur Kopfleiste 16 weisenden Seite weist die Federzunge 30 eine Sperrnase 34 auf. Diese ist keilförmig gestaltet und nimmt zum Ende hin in ihrer Höhe zu, sodass die Montage der Endkappe 24 erleichtert wird. Die Federzunge 30 wirkt mit einem Riegel 38 zusammen, der in einer Aussparung 28 der Endkappe 24 geführt ist und in der Verriegelungsposition (Fig. 3) die Federzunge 30 gegen die Kopfleiste 16 drückt und blockiert. Dabei greift der Vorsprung 34 in die Kopfleiste 16. Bei einer Schwenkbewegung der Federzunge 30 richtet sich die dem Ende zugewandte Flanke der keilförmigen Sperrnase 34 vermehrt auf, sodass die Endkappe 30 gegen ein Abziehen gesichert ist. Nach dem Lösen des Riegels 38 nimmt die Federzunge 30 ihrer Ausgangsstellung wieder ein, wobei die Sperrnase 34 mit Unterstützung der Elastizität der Kopfleiste 16 außer Eingriff gerät. Um den Druck des Riegels 38 auf die Federzunge 30 zu verstärken, kann die Federzunge 30 auf der der Sperrnase 34 abgewandten Seite einen keilförmigen Vorsprung 32 besitzen, der zum Ende der Wischleiste 12 hin in der Höhe abnimmt.

Zusätzlich zur Sperrnase 34 kann die Federzunge 30 zwei seitlich davon und symmetrisch angeordnete Rastzapfen 36 aufweisen, die im montierten Zustand in Rastlöcher 22 eingreifen, die im Endbereich der Federschienen 18 und 20 angeordnet sind und als zusätzliche Führung dienen. Zweckmäßigerweise sind die Rastlöcher 22 als Langlöcher ausgebildet, sodass die Federschienen 18, 20 in Längsrichtung ein begrenztes Spiel haben, das für die unterschiedlichen Krümmungen des Wischblatts 10 erforderlich ist. Ferner bestimmen die Rastzapfen 36 den Abstand der Federschienen 18, 20 zueinander. Dadurch besitzt der Steg der Wischleiste 12 zwischen den Federschienen einen ausreichenden Freiraum für eine gute Funktionalität.

Im montierten Zustand deckt die Endkappe 24 das Ende des Wischblatts 10 ab (Fig. 3). Indem sie mit einem Anschlussprofil 40 formschlüssig an den Spoiler grenzt, entsteht eine aerodynamisch günstige Außenkontur des Wischblatts 10. Zur Montage wird die Endkappe 24 über das Ende der Wischleiste 12 mit den vormontierten Federschienen 18 und 20 geschoben. Um eine genaue Positionierung der Endkappe 24 in Längsrichtung der Wischleiste 12 zu erreichen, sind die inneren Führungsprofile 26 einen ihren endseitigen Stirnseiten geschlossen. Diese Anlageflächen können als Montageanschläge dienen. Im montierten Zustand umfasst die Endkappe 24 mit ihrem maßlich und konturenmäßig genau abgestimmten inneren Führungsprofil 26 das Ende der Wischleiste 12 und der Federschienen 18, 20 und fixiert lösbar die Lage der Teile zueinander.

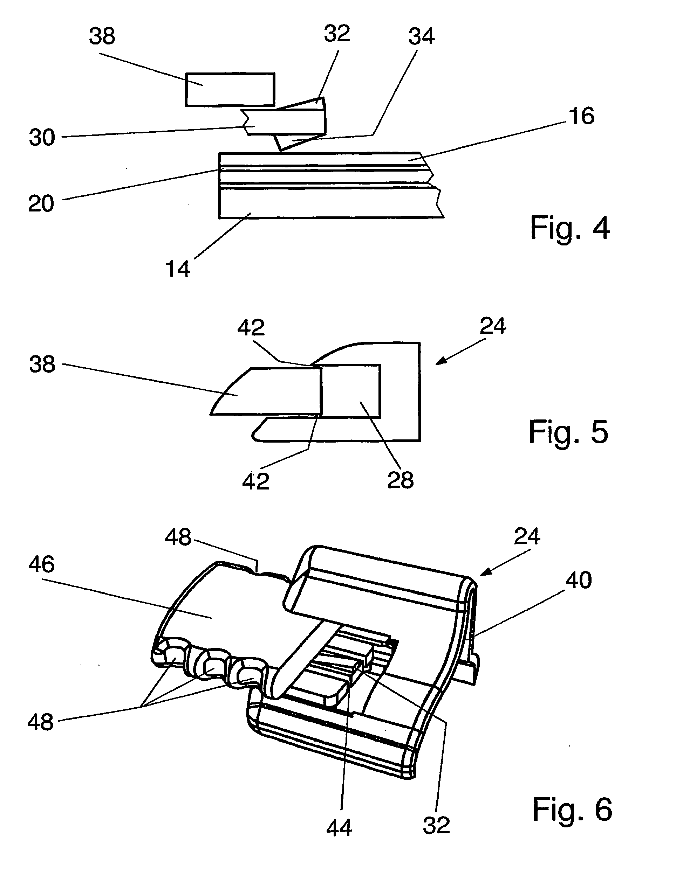

Der Riegel 38 ist in einer zur äußeren Stirnseite der Endkappe 24 weisenden Aussparung 28 angeordnet und vor der Endmontage über Sollbruchstellen 42 mit der Endkappe 24 verbunden, wodurch vorteilhafterweise nur ein Bauteil zu Handhaben ist oder der Riegel 38 beim Transport nicht verloren gehen kann (Fig. 5). Die Sollbruchstellen 42 können dünne Stege, Zapfen oder Filmscharniere sein. Während der Endmontage wird die Sollbruchstelle 42 gelöst und der Riegel 38 in die Aussparung 28 und über die Federzunge 30 bis zu einer Verriegelungsposition geschoben.

Für den Fall, dass beispielsweise eine verschlissene Wischleiste 12 ausgetauscht werden soll, ist die erfindungsgemäße Endkappe 24 auf einfache Weise demontierbar. Dazu wird der Riegel 38 aus der Aussparung 28 gezogen, wobei die Federzunge 30 abhebt und die Sperrnase 34 sich aus ihrer Verrastung löst. Um das Handhaben des Riegels 38 während der Demontage bzw. Montage zu vereinfachen, sieht eine Ausgestaltung der Erfindung einen Riegel 46 mit mehreren seitlichen Griffmulden 48 vor (Fig. 6). Ferner weist die Ausgestaltung eine geschlitzte Federzunge 44 auf. Dabei sind der keilförmige Vorsprung 32 und die Sperrnase 34 am mittleren Teil angeordnet, während die äußeren Teile der Federzunge 44 für die Rastzapfen 36 vorgesehen sind.

## Patentansprüche

1. Wischblatt (10) mit einer gummielastischen Wischleiste (12), in deren seitliche Längsnuten Federschienen (18, 20) als Tragelemente eingesetzt sind, wobei die Federschienen (18, 20) an ihren Enden zusammengehalten und relativ zur Wischleiste (12) in Längsrichtung fixiert sind sowie eine Endkappe (24) tragen, **dadurch gekennzeichnet, dass** die Endkappe (24) lösbare Fixiermittel (34) aufweist, die in eine Kopfleiste (16) der Wischleiste (12) eingreift, wobei die axiale Verschiebbarkeit der Federschienen (18, 20) relativ zur Wischleiste (24) begrenzt ist und die Endkappe (24) eine im Wesentlichen parallel zur oberen Seite der Kopfleiste (16) verlaufende Federzunge (32, 44) aufweist, die an ihrer Unterseite eine in die Kopfleiste (16) eingreifende Sperrnase (34) aufweist und die Endkappe (24) eine zur äußeren Stirnseite weisende Aussparung (28) aufweist, in der ein Riegel (38, 46) geführt ist, der in einer Verriegelungsposition die Federzunge (30, 44) mit ihrer Sperrnase (34) gegen die Kopfleiste (16) drückt.

2. Wischblatt (10) nach Anspruch 1, **dadurch gekennzeichnet, dass** die Federzunge (30, 44) auf ihrer dem Riegel (38, 46) zugewandte Seite einen keilförmigen Vorsprung (32) aufweist, der in Öffnungsrichtung des Riegels (38, 46) in seiner Höhe abnimmt. (Fig. 4)

3. Wischblatt (10) nach einem der vorhergehenden Ansprüche, **dadurch gekennzeichnet, dass** die Sperrnase (34) in Öffnungsrichtung des Riegels (38, 46) keilförmig in der Höhe zunimmt. (Fig. 4.)

4. Wischblatt (10) nach einem der vorhergehenden Ansprüche, **dadurch gekennzeichnet, dass** der Riegel (38, 46) vor der Endmontage über mindestens eine Sollbruchstelle (42) mit der Endkappe (24) verbunden ist.

5. Wischblatt (10) nach einem der vorhergehenden Ansprüche, **dadurch gekennzeichnet, dass** die Federzunge (30) an der den Federschienen (18, 20) zugewandte Seite Rastzapfen (36) aufweist, die in Rastlöcher (22) der Federschienen (18, 20) einrasten.

6. Wischblatt (10) nach einem der vorhergehenden Ansprüche, **dadurch gekennzeichnet, dass** der Riegel (46) seitliche Griffmulden (48) besitzt.

## Claims

1. Wiper blade (10) with a rubber-elastic wiper strip (12), into the lateral longitudinal grooves of which spring rails (18, 20) are inserted as supporting elements, wherein the spring rails (18, 20) are held together at their ends and are fixed in the longitudinal direction relative to the wiper strip (12) and also bear an end cap (24), **characterized in that** the end cap (24) has releasable fixing means (34) which engage in a top strip (16) of the wiper strip (12), the axial displaceability of the spring rails (18, 20) relative to the wiper strip (24) being limited, and the end cap (24) having a spring tongue (32, 44) which runs substantially parallel to the upper side of the top strip (16) and, on its lower side, has a locking lug (34) which engages in the top strip (16), and the end cap (24) having a cutout (28) which points towards the outer end side and in which a latch (38, 46) is guided, said latch pressing the spring tongue (30, 44) by means of its locking lug (34) against the top strip (16) in a locking position.

2. Wiper blade (10) according to Claim 1, **characterized in that** the spring tongue (30, 44), on its side facing the latch (38, 46), has a wedge-shaped projection (32), the height of which decreases in the opening direction of the latch (38, 46). (Figure 4)

3. Wiper blade (10) according to one of the preceding claims, **characterized in that** the locking lug (34) increases in height in a wedge-shaped manner in the opening direction of the latch (38, 46). (Figure 4)

4. Wiper blade (10) according to one of the preceding claims, **characterized in that** the latch (38, 46) is connected to the end cap (24) via at least one predetermined breaking point (42) before the final assembly.

5. Wiper blade (10) according to one of the preceding claims, **characterized in that** the spring tongue (30), on the side facing the spring rails (18, 20), has latching pins (36) which latch into latching holes (22) in the spring rails (18, 20).

6. Wiper blade (10) according to one of the preceding claims, **characterized in that** the latch (46) has lateral recessed grips (48).

## Revendications

1. Balai d'essuie-glace (10) comportant une lame d'essuyage (12) élastique comme du caoutchouc, et dont les rainures longitudinales latérales logent des rails élastiques (raidisseurs) (18, 20) comme éléments de support, les raidisseurs (18, 20) étant maintenus réunis à leurs extrémités et fixés dans la direction longitudinale par rapport à la lame d'essuyage (12) et ils portent un capuchon d'extrémité (24)
**caractérisé en ce que**
le capuchon d'extrémité (24) comporte des moyens de fixation amovibles (34) pénétrant dans un longeron de tête (16) de la lame d'essuyage (12), le coulissement axial des raidisseurs (18, 20) par rapport à la lame d'essuyage (12) étant limité et le capuchon d'extrémité (24) comporte une languette élastique (32, 44), pratiquement parallèle au côté supérieur du longeron de tête (16), cette languette ayant sur son côté inférieur, un bec de blocage (34) pénétrant dans le longeron de tête (16) et
le capuchon d'extrémité (24) comporte un dégagement (28) tourné vers le côté extérieur, guidant un verrou (38, 46), qui pousse la languette élastique (34, 44) avec son bec de verrouillage (34) contre le longeron de tête (16) en position de verrouillage.

2. Balai d'essuie-glace (10) selon la revendication 1,
**caractérisé en ce que**
la languette élastique (30, 44) comporte une partie en saillie (32) en forme de coin sur son côté tourné vers le verrou (38, 46), cette partie en saillie diminuant de hauteur dans le sens de l'ouverture du verrou (38, 46) (figure 4).

3. Balai d'essuie-glace (10) selon l'une des revendications précédentes,
**caractérisé en ce que**
le bec de blocage (34) augmente de hauteur suivant une forme de coin dans le sens de l'ouverture du verrou (38, 46) (figure 4).

4. Balai d'essuie-glace (10) selon l'une des revendications précédentes,
**caractérisé en ce que**
le verrou (38, 46) est relié au capuchon d'extrémité (24) avant le montage définitif, par au moins un point de rupture de consigne (42).

5. Balai d'essuie-glace (10) selon l'une des revendications précédentes,
**caractérisé en ce que**
le côté de la languette élastique (30) tourné vers les raidisseurs (18, 20) comporte des goujons d'accrochage (36) pénétrant dans les orifices d'accrochage (22) des raidisseurs (18, 20).

6. Balai d'essuie-glace (10) selon l'une des revendications précédentes,
**caractérisé en ce que**
le verrou (46) comporte des cavités latérales de préhension (48).
